# EUROPÄISCHE PATENTSCHRIFT

(11) **EP 3 276 706 B1**
(45) Veröffentlichungstag und Bekanntmachung des Hinweises auf die Patenterteilung: **26.12.2018**
(21) Anmeldenummer: 16181000.7
(22) Anmeldetag: 25.07.2016
(51) Int. Cl.: H01M 4/06, H01M 4/62, H01M 6/04, H01M 6/12, H01M 6/40, H01M 12/00, H01M 4/42, H01M 4/50, H01M 4/52, H01M 4/54, H01M 12/06

(54) **ELEKTROCHEMISCHE ZELLE UND DAMIT BETRIEBENE SENSORVORRICHTUNG**
ELECTROCHEMICAL CELL AND SENSOR DEVICE DRIVEN WITH SAME
CELLULE ELECTROCHIMIQUE ET DISPOSITIF DE CAPTEUR FONCTIONNEMENT AVEC CELLE-CI

(43) Veröffentlichungstag der Anmeldung: 31.01.2018
(73) Patentinhaber: VARTA Microbattery GmbH, 73479 Ellwangen (DE)
(72) Erfinder: Krebs, Martin, 73494 Rosenberg (DE); Pytlik, Edward, 73479 Ellwangen (DE)
(74) Vertreter: Patentanwaltskanzlei Cartagena

(56) Entgegenhaltungen:
- WO-A1-2016/075465
- US-A- 5 744 258
- US-A1- 2015 235 776

## Beschreibung

Die nachstehend beschriebene Erfindung betrifft eine elektrochemische Zelle sowie eine Sensorvorrichtung umfassend die beschriebene Zelle.

Elektrochemische Zellen umfassen stets eine positive und eine negative Elektrode. Bei der Entladung einer elektrochemischen Zelle findet eine energieliefernde chemische Reaktion statt, welche sich aus zwei elektrisch miteinander gekoppelten, aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Bei der Entladung werden an der negativen Elektrode durch einen Oxidationsprozess Elektronen freigesetzt, resultierend in einem Elektronenstrom - meist über einen äußeren Verbraucher - zur positiven Elektrode, von der eine entsprechende Menge an Elektronen aufgenommen wird. An der positiven Elektrode findet also ein Reduktionsprozess statt. Zeitgleich kommt es zu einem der Elektrodenreaktion entsprechenden lonenstrom innerhalb der Zelle. Dieser lonenstrom wird durch einen ionisch leitenden Elektrolyten gewährleistet. In sekundären elektrochemischen Zellen ist diese Entladereaktion reversibel, es besteht also die Möglichkeit, die bei der Entladung erfolgte Umwandlung chemischer Energie in elektrische umzukehren. Bei primären Zellen ist die Entladereaktion hingegen irreversibel oder aber eine Wiederaufladung der Zelle verbietet sich aus anderen Gründen.

Ursprünglich wurden mehrere in Serie geschaltete elektrochemische Zellen in einem Gehäuse als Batterie bezeichnet. Heute werden jedoch häufig auch einzelne elektrochemische Zellen als Batterie bezeichnet.

Elektrochemische Zellen sind nicht nur durch Zusammenfügen fester Einzelkomponenten herstellbar, vielmehr gewinnen in den letzten Jahren auch verstärkt Zellen an Bedeutung, zu deren Herstellung zumindest einzelne Funktionsteile, insbesondere die Elektroden und/oder erforderlichen Leiterbahnen, durch Druck, also aus einer Lösungs- und/oder Suspensionsmittel-haltigen Paste, hergestellt werden. In der Regel weisen gedruckte elektrochemische Zellen einen mehrschichtigen Aufbau auf. In herkömmlicher Bauweise umfasst eine gedruckte elektrochemische Zelle meist zwei Stromkollektorebenen, zwei Elektrodenebenen und eine Separatorebene in stapelartiger Anordnung. Die Separatorebene ist dabei zwischen den zwei Elektrodenebenen angeordnet, während die Stromkollektoren die Ober- bzw. die Unterseite der elektrochemischen Zelle bilden. Eine elektrochemische Zelle mit einem solchen Aufbau ist beispielsweise in der US 4119770 A beschrieben.

Deutlich flachere elektrochemische Zellen, bei denen sich die Elektroden nebeneinander auf einem flächigen, elektrisch nicht leitenden Substrat befinden (koplanare Anordnung), sind in der WO 2006/105966 A1 beschrieben. Die Elektroden sind hierbei über einen ionenleitfähigen Elektrolyten miteinander verbunden, bei dem es sich beispielsweise um eine gelartige Zinkchloridpaste handeln kann. In aller Regel ist der Elektrolyt dabei durch ein vlies- oder netzartiges Material verstärkt und stabilisiert.

Gedruckte elektrochemische Elemente sind sehr günstig herzustellen, weisen jedoch häufig nur eine sehr geringe Strombelastbarkeit auf. Dies gilt insbesondere für die in der WO 2006/105966 A1 beschriebenen Zellen. Durch die koplanare Anordnung der Elektroden müssen bei einer Entladung von einer Elektrode zur anderen wandernde Ionen sehr weite Strecken zurücklegen. Entsprechend hoch ist der Innenwiderstand einer elektrochemischen Zelle mit Elektroden in koplanarer Anordnung. Elektrochemische Zellen mit Elektroden in Stapelanordnung weisen eine vergleichsweise gute Strombelastbarkeit auf.

Sowohl die in der US 4119770 A als auch die in der WO 2006/105966 A1 beschriebenen Zellen sind gut dazu geeignet, niedrige Ströme gleichmäßig über eine längere Zeitdauer zu liefern. Ihnen fehlt aber die Eignung, in regelmäßigen Abständen auch Pulsströme höherer Intensität liefern zu können.

Aus der US 2015/235776 A1 sind elektrochemische Zellen bekannt, die sowohl elektrochemische Aktivmaterialien, die zur Ausbildung einer elektrischen Doppelschicht befähigt sind, als auch elektrochemische Aktivmaterialien, die Energie über einen faradayschen Ladungsaustausch speichern, enthalten. Als Beispiele für solche Materialien sind diverse kohlenstoffbasierte Materialien sowie Zink, Magnesium und Eisen erwähnt.

Aus der US 5744258 A sind Elektroden bekannt, die sich durch eine Kombination von sogenannten "High-Energy"- und "High-Rate"-Materialien auszeichnen, wobei mit High-Rate-Materialien solche Materialien gemeint sind, die eine elektrische Doppelschicht ausbilden, und mit High-Energy-Materialien solche, die wie Zink und Eisen eine große Energiedichte aufweisen. Es ist beschrieben, dass die Elektroden hohe Entladepulse abgeben können und dass das High-Rate-Material und das High-Energy-Material auch separat voneinander in einer koplanaren Anordnung auf einem Substrat angeordnet werden können.

Der vorliegend beschriebenen Erfindung lag die Aufgabe zugrunde, die aus den genannten Druckschriften bekannten gedruckten elektrochemischen Zellen hinsichtlich ihrer Eignung, solche Pulsströme abgeben zu können, zu verbessern.

Diese Aufgabe wird gelöst durch die elektrochemische Zelle mit den Merkmalen des Anspruchs 1. Bevorzugte Ausführungsformen der erfindungsgemäßen Zelle sind in den abhängigen Ansprüchen 2 bis 6 angegeben. Darüber hinaus ist auch die Sensorvorrichtung mit den Merkmalen des Anspruchs 7 Gegenstand der vorliegenden Erfindung. Der Wortlaut sämtlicher Ansprüche wird hiermit durch Bezugnahme zum Inhalt der vorliegenden Beschreibung gemacht.

Die erfindungsgemäße elektrochemische Zelle umfasst wie alle gattungsgemäßen Zellen eine positive und eine negative Elektrode, die über einen ionenleitfähigen Elektrolyten miteinander verbunden sind. Sie zeichnet sich allerdings dadurch aus, dass die positive Elektrode ein erstes positives und ein zweites positives Elektrodenmaterial umfasst und die negative Elektrode ein erstes negatives und ein zweites negatives Elektrodenmaterial umfasst.

Das erste positive Elektrodenmaterial zeichnet sich dabei dadurch aus, dass es eine höhere Doppelschichtkapazität als das zweite positive Elektrodenmaterial aufweist. In einer erfindungsgemäßen elektrochemischen Zelle ist das erste positive Elektrodenmaterial getrennt von dem zweiten positiven Elektrodenmaterial in einem ersten Teilbereich der positiven Elektrode angereichert. Das zweite positive Elektrodenmaterial ist getrennt von dem ersten positiven Elektrodenmaterial in einem zweiten Teilbereich der positiven Elektrode angereichert.

Das erste negative Elektrodenmaterial zeichnet sich dadurch aus, dass es eine höhere Doppelschichtkapazität als das zweite negative Elektrodenmaterial aufweist. In einer erfindungsgemäßen elektrochemischen Zelle ist das erste negative Elektrodenmaterial getrennt von dem zweiten negativen Elektrodenmaterial in einem ersten Teilbereich der negativen Elektrode angereichert. Das zweite negative Elektrodenmaterial ist getrennt von dem ersten negativen Elektrodenmaterial in einem zweiten Teilbereich der negativen Elektrode angereichert.

Unter einem Elektrodenmaterial wird gemeinhin ein Material verstanden, das aktiv an den Entladungs- und gegebenenfalls auch Ladungsprozessen in einer elektrochemischen Zelle teilnimmt, elektrische Energie also abgeben und gegebenenfalls wieder aufnehmen kann. Wie eingangs erläutert, ist Energie in einer Batterie in der Regel in chemischer Form gespeichert und wird während eines Entladungsprozesses in elektrische Energie umgewandelt. Darüber hinaus ist es aber natürlich auch möglich, elektrische Energie statisch in Form getrennter elektrischer Ladungen zu speichern. Dies erfolgt so klassisch in Kondensatoren.

Bereits seit langem bekannt sind sogenannte Doppelschichtkondensatoren (englisch: electric double layer capacitor). Bei diesen bildet sich an der Phasengrenze zwischen Elektrodenoberfläche und Elektrolyt beim Anlegen einer elektrischen Spannung eine Doppelschichtkapazität aus. In dieser ist elektrische Energie in einem elektrischen Feld gespeichert. Die Menge der gespeicherten Ladung ist dabei proportional zur angelegten Spannung und wird ganz wesentlich durch die Größe und Beschaffenheit der Elektrodenoberfläche bestimmt.

Superkondensatoren (englisch: supercaps) speichern elektrische Energie sowohl in einer Doppelschicht als auch elektrochemisch. Sie weisen somit sowohl eine Doppelschichtkapazität auf als auch eine sogenannte Pseudokapazität (Speicherung elektrischer Energie durch Faraday'schen Ladungsaustausch mit Hilfe von Redoxreaktionen).

Die Elektroden von Superkondensatoren weisen in der Regel ein Material auf, das die Pseudokapazität bereitstellt. Ein weiteres Material stellt die Doppelschichtkapazität bereit. Diese Materialien liegen in den Elektroden eines Superkondensators aber nicht in getrennten Bereichen vor, sondern als homogene Mischung. Hierdurch unterscheidet sich eine erfindungsgemäße elektrochemische Zelle sehr deutlich von einem Superkondensator.

Bei der erfindungsgemäßen elektrochemischen Zelle handelt es sich in bevorzugten Ausführungsformen um eine Primärzelle, also um eine nicht wiederaufladbare Zelle.

Bei der erfindungsgemäßen elektrochemischen Zelle handelt es sich um eine Zelle, bei der die positive und die negative Elektrode getrennt durch einen Spalt in einer koplanaren Anordnung nebeneinander auf einem flächigen Substrat angeordnet sind. Erfindungsgemäß ist vorgesehen, dass der erste Teilbereich der positiven Elektrode unmittelbar an eine Seite des Spalts zwischen den Elektroden angrenzt und der erste Teilbereich der negativen Elektrode unmittelbar an einer anderen Seite des Spalts zwischen den Elektroden angrenzt.

Es ist weiterhin bevorzugt, dass der erste Teilbereich der positiven Elektrode und der erste Teilbereich der negativen Elektrode jeweils streifenförmig ausgebildet sind.

In einer weiteren bevorzugten Ausführungsform der erfindungsgemäßen elektrochemischen Zelle sind die positive und die negative Elektrode übereinander in einem Stapel angeordnet. In diesem Fall ist es bevorzugt, dass der erste Teilbereich der positiven Elektrode eine Schicht bildet, die der negativen Elektrode zugewandt ist, und dass der erste Teilbereich der negativen Elektrode eine Schicht bildet, die der positiven Elektrode in dem Stapel zugewandt ist.

Besonders bevorzugt zeichnet sich die erfindungsgemäße elektrochemische Zelle durch mindestens eines der folgenden Merkmale aus:
(a) Das erste positive Elektrodenmaterial weist bevorzugt einen höheren prozentualen Anteil (bezogen auf das Gesamtgewicht aller festen Bestandteile des positiven Elektrodenmaterials) an mindestens einem Kohlenstoff-basierten Material, insbesondere aus der Gruppe mit Aktivkohle (AC), Aktivkohlefaser (AFC), Carbid-abgeleiteter Kohlenstoff (CDC), Kohlenstoff-Aerogel, Graphit (Graphen) und Kohlenstoffnanoröhrchen (CNTs), auf als das zweite positive Elektrodenmaterial.
(b) Das erste negative Elektrodenmaterial weist bevorzugt einen höheren prozentualen Anteil (bezogen auf das Gesamtgewicht aller festen Bestandteile des negativen Elektrodenmaterials) an mindestens einem Kohlenstoff-basierten Material, insbesondere aus der Gruppe mit Aktivkohle (AC), Aktivkohlefaser (AFC), Carbid-abgeleiteter Kohlenstoff (CDC), Kohlenstoff-Aerogel, Graphit (Graphen) und Kohlenstoffnanoröhrchen (CNTs), auf als das zweite negative Elektrodenmaterial.

Durch den höheren prozentualen Anteil an dem mindestens einen Kohlenstoff-basierten Material ist gewährleistet, dass das erste positive Elektrodenmaterial eine höhere Doppelschichtkapazität als das zweite positive Elektrodenmaterial aufweist und/oder das erste negative Elektrodenmaterial eine höhere Doppelschichtkapazität als das zweite negative Elektrodenmaterial aufweist. Die genannten Kohlenstoff-basierten Materialien sind nämlich in besonderem Maß zur Ausbildung von Doppelschichtkapazitäten befähigt.

Bei Aktivkohle handelt es sich bekanntlich um eine poröse, besonders feinkörnige Kohlenstoffmodifikation mit großer innerer Oberfläche. Erfindungsgemäß eingesetzte Aktivkohle weist bevorzugt eine BET-Oberfläche von mindestens 800 m²/g, bevorzugt von mindestens 900 m²/g (jeweils bestimmt gemäß DIN ISO 9277) auf. Alternativ oder zusätzlich weist die erfindungsgemäß verwendete Aktivkohle einen Kapazitätswert von mindestens 60 F/g (bestimmt gemäß DIN IEC 62391) auf.

Aktivkohlefasern können aus Aktivkohle gewonnen werden. Sie sind ebenfalls porös, weisen eine große innere Oberfläche auf und haben meist einen typischen Durchmesser von etwa 10 µm. Neben einer hohen spezifischen Kapazität weisen Aktivkohlefasern eine außerordentlich gute Leitfähigkeit entlang der Faserachse auf.

Kohlenstoff-Aerogel ist ein synthetisches, hochporöses Material aus einem organischen Gel, in dem die flüssige Komponente des Gels durch Pyrolyse mit einem Gas ersetzt wurde. Kohlenstoff-Aerogele können beispielsweise durch Pyrolyse von Resorcin-Formaldehyd hergestellt werden. Sie weisen eine bessere elektrische Leitfähigkeit auf als Aktivkohle.

Carbid-abgeleitete Kohlenstoffe bestehen aus einer Anzahl von Stoffen, die aus Carbiden wie zum Beispiel Siliciumcarbid und Titancarbid durch thermische Zersetzung oder durch chemische Halogenierung in einen reinen Kohlenstoff umgewandelt wurden. Elektroden aus Carbid-abgeleiteten Kohlenstoffen besitzen große Oberflächen mit maßgeschneiderten Porengrößen. Im Allgemeinen haben Elektroden aus CDC eine höhere Energiedichte als Elektroden aus Aktivkohle.

Bei Graphen handelt es sich um eine Kohlenstoffmodifikation mit zweidimensionaler Struktur. Eine Vielzahl von verketteten Benzol-Ringen bildet ein bienenwabenförmiges Muster aus, in dem jedes Kohlenstoffatom im Winkel von 120° von drei weiteren Kohlenstoffatomen umgeben ist und wobei alle Kohlenstoffatome sp2-hybridisiert sind. Graphen bietet die theoretisch größte mit Kohlenstoff erreichbare Oberfläche pro Gewichtseinheit und ist daher aktuell Gegenstand intensiver Untersuchungen im Zusammenhang mit der Entwicklung von Superkondensatoren.

Bei Kohlenstoffnanoröhrchen handelt es sich um zu zylindrischen Nanoröhren umgeformte Graphenschichten. Es gibt einwandige Nanoröhren und mehrwandige Nanoröhren, bei denen mehrere einwandige Nanoröhren koaxial ineinander verschachtelt angeordnet sind. Allgemein besitzen CNT-Elektroden eine kleinere Elektrodenoberfläche als Aktivkohle. Ungeachtet dessen lassen sich mit CNTs höhere Kapazitäten erzielen als mit Aktivkohle-Elektroden.

Selbstverständlich können die genannten Kohlenstoff-basierten Materialien auch in Kombination miteinander verwendet werden. Hierbei ist jedes Mischungsverhältnis denkbar.
(c) Das erste positive Elektrodenmaterial weist bevorzugt einen Anteil an dem mindestens einen Kohlenstoff-basierten Material im Bereich von 5 Gew.-% bis 100 Gew.-% auf. Innerhalb dieses Bereichs sind Anteile im Bereich von 25 Gew.-% bis 100 Gew.-%, insbesondere im Bereich von 50 Gew.-% bis 100 Gew.-%, weiter bevorzugt.
(d) Das zweite positive Elektrodenmaterial weist bevorzugt einen Anteil an dem mindestens einen Kohlenstoff-basierten Material im Bereich von 0 Gew.-% bis 50 Gew.-% auf. Innerhalb dieses Bereichs sind Anteile im Bereich von 0,1 Gew.-% bis 15 Gew.-%, insbesondere im Bereich von 1 Gew.-% bis 10 Gew.-%, weiter bevorzugt.
(e) Das erste negative Elektrodenmaterial weist bevorzugt einen Anteil an dem mindestens einen Kohlenstoff-basierten Material im Bereich von 5 Gew.-% bis 100 Gew.-% auf. Innerhalb dieses Bereichs sind Anteile im Bereich von 25 Gew.-% bis 100 Gew.-%, insbesondere im Bereich von 50 Gew.-% bis 100 Gew.-%, weiter bevorzugt.
(f) Das zweite negative Elektrodenmaterial weist bevorzugt einen Anteil an dem mindestens einen Kohlenstoff-basierten Material im Bereich von 0 Gew.-% bis 50 Gew.-% auf. Innerhalb dieses Bereichs sind Anteile im Bereich von 0,1 Gew.-% bis 15 Gew.-%, insbesondere im Bereich von 1 Gew.-% bis 10 Gew.-%, weiter bevorzugt.

In besonders bevorzugten Ausführungsformen umfassen das erste positive Elektrodenmaterial und das erste negative Elektrodenmaterial - abgesehen von dem mindestens einen Kohlenstoff-basierten Material - keine weiteren Aktivmaterialien. In bevorzugten Ausführungsformen können sie aus dem mindestens einen Kohlenstoff-basierten Material bestehen.

Bei den genannten Prozentangaben handelt es sich jeweils um Angaben, die sich auf das Gesamtgewicht aller festen Bestandteile des jeweiligen Elektrodenmaterials beziehen (also ohne Berücksichtigung eines Elektrolyten).

Weiterhin ist bevorzugt, dass sich in allen angegebenen sowie in allen aus obigen Angaben ableitbaren Zusammensetzungen für die Elektrodenmaterialien die Prozentanteile der jeweils enthaltenen Komponenten auf 100 Gew.-% addieren.

Neben den genannten Kohlenstoff-basierten Materialien können alle genannten Elektrodenmaterialien als weitere feste Bestandteile auch einen Elektrodenbinder und/oder ein Leitmittel enthalten.

Bei dem Leitmittel handelt es sich beispielsweise um ein Metallpulver, insbesondere um Nickel- und/oder Cobaltpulver.

Als Elektrodenbinder kann beispielsweise ein Cellulose-basierter Binder, beispielsweise Carboxymethylcellulose oder ein Derivat von Carboxymethylcellulose, verwendet werden. Besonders geeignet sind auch wasserlösliche Celluloseether wie beispielsweise Methylhydroxyethylcellulose (MHEC), Methylhydroxypropylcellulose (MHPC) und Hydroxyethylcellulose (HEC). Alternativ kommen aber auch Polyacrylate oder Kunststoff-basierte Binder wie zum Beispiel PTFE-Binder (PTFE = Polytetrafluorethylen) oder Binder auf Basis von SBR (Styrene-Butadien-Rubber) in Frage.

Besonders bevorzugt ist ein erfindungsgemäßes elektrochemisches Element, wenn die obigen Merkmale (a) bis (f) in Kombination miteinander verwirklicht sind.

In weiteren bevorzugten Ausführungsformen ist eine erfindungsgemäße elektrochemische Zelle durch mindestens eines der folgenden zusätzlichen Merkmale gekennzeichnet:
(g) Das erste positive Elektrodenmaterial weist bevorzugt einen Anteil an einem Übergangsmetalloxid und/oder einem leitfähigen Polymer auf, welcher dem Elektrodenmaterial eine Pseudokapazität verleiht.
(h) Das erste negative Elektrodenmaterial weist bevorzugt einen Anteil an einem Metall und/oder einem leitfähigen Polymer auf, welcher dem Elektrodenmaterial eine Pseudokapazität verleiht.
(i) Das erste positive Elektrodenmaterial weist bevorzugt einen Anteil an dem Übergangsmetalloxid und/oder dem leitfähigen Polymer von 0,1 Gew.-% bis 25 Gew.-% auf.
(j) Das erste negative Elektrodenmaterial weist einen Anteil an dem Metall und/oder dem leitfähigen Polymer im Bereich von 0,1 Gew.-% bis 25 Gew.-% auf.

Als Übergangsmetalloxid kommen für das erste positive Elektrodenmaterial im Grunde alle Übergangsmetalloxide in Frage, die dazu in der Lage sind, Redoxreaktionen mit Faraday'schem Ladungstransfer zu bewerkstelligen. Dazu gehören insbesondere Rutheniumoxid, Iridiumoxid, Eisenoxid, Manganoxid und Nickeloxid bzw. Nickelhydroxid.

Als geeignete leitfähige Polymere eignen sich insbesondere Polypyrrol, Polyanilin, Pentacen oder Polythiophen.

In besonders bevorzugten Ausführungsformen sind bei einer erfindungsgemäßen elektrischen Zelle die Merkmale (g) bis (j) in Kombination verwirklicht, insbesondere auch gleichzeitig mit den Merkmalen (a) bis (f).

Das zweite positive Elektrodenmaterial umfasst in bevorzugten Ausführungsformen ein Material aus der Gruppe mit Mangandioxid, Silberoxid, Nickelhydroxid oder einen Katalysator, der die Reduktion von Luftsauerstoff bei Raumtemperatur katalysiert. Bei einem solchen Katalysator handelt es sich beispielsweise um Platin, Palladium oder Manganoxid.

Das zweite negative Elektrodenmaterial umfasst in bevorzugten Ausführungsformen Zink oder eine Zinklegierung.

Aus diesen Ausführungen wird klar, dass es sich bei der erfindungsgemäßen elektrochemischen Zelle bevorzugt um eine Zink-Braunstein-Zelle (im Fall von Zink als Bestandteil des zweiten negativen Elektrodenmaterials und Mangandioxid als Bestandteil des zweiten positiven Elektrodenmaterials), um eine Silberoxid-Zink-Zelle (im Fall von Zink als Bestandteil des zweiten negativen Elektrodenmaterials und Silberoxid als Bestandteil des zweiten positiven Elektrodenmaterials), um eine Nickel-Oxyhydroxid-Zelle (im Fall von Zink als Bestandteil des zweiten negativen Elektrodenmaterials und Nickelhydroxid als Bestandteil des zweiten positiven Elektrodenmaterials im Fall von Nickelhydroxid) oder um eine Zink-Luft-Zelle (im Fall von Zink als Bestandteil des zweiten negativen Elektrodenmaterials und des die Reduktion von Luftsauerstoff katalysierenden Materials als Bestandteil des zweiten positiven Elektrodenmaterials) handelt.

Das zweite positive Elektrodenmaterial weist bevorzugt einen Anteil an dem Mangandioxid, dem Silberoxid, dem Nickelhydroxid oder dem Katalysator im Bereich von 50 Gew.-% bis 100 Gew.-% auf. Innerhalb dieses Bereichs sind Anteile im Bereich von 75 Gew.-% bis 100 Gew.-% weiter bevorzugt.

Das zweite negative Elektrodenmaterial weist bevorzugt einen Anteil an dem Zink oder der Zinklegierung im Bereich von 50 Gew.-% bis 100 Gew.-% auf. Innerhalb dieses Bereichs sind Anteile im Bereich von 75 Gew.-% bis 100 Gew.-% weiter bevorzugt.

Auch bei diesen Angaben ist es bevorzugt, dass es sich bei den genannten Prozentangaben jeweils um Angaben handelt, die sich auf das Gesamtgewicht aller festen Bestandteile des jeweiligen Elektrodenmaterials beziehen, und dass sich in allen angegebenen sowie in allen aus obigen Angaben ableitbaren Zusammensetzungen für die Elektrodenmaterialien die Prozentanteile der jeweils enthaltenen Komponenten auf 100 Gew.-% addieren.

Aufgrund der beschriebenen Zusammensetzung der Elektroden eines erfindungsgemäßen elektrochemischen Elements ist dieses dazu in der Lage, neben kontinuierlichen kleinen Strömen in regelmäßigen Abständen auch stärkere Pulsströme liefern zu können. Diese Eigenschaft ist auf die Anwesenheit des ersten positiven und des ersten negativen Elektrodenmaterials sowie auf dessen vergleichsweise hohe Doppelschichtkapazität zurückzuführen. Die in diesen Materialien in Form einer elektrischen Doppelschicht gespeicherte elektrische Energie kann stoßweise abgegeben werden. Anschließend erfolgt dann innerhalb der Elektroden ein Ladungsausgleich, bei dem in dem zweiten positiven und dem zweiten negativen Elektrodenmaterial chemisch gespeicherte Energie in elektrische umgewandelt wird. Nach kurzer Zeit ist der Bereich der Elektroden, in dem das erste positive und das erste negative Elektrodenmaterial angeordnet sind, wieder statisch aufgeladen.

Es gibt viele Anwendungsfelder für die oben beschriebene elektrochemische Zelle. Besonders geeignet ist die elektrochemische Zelle für Sensorvorrichtungen. Beispielsweise gibt es Temperatursensoren zur Überwachung temperaturempfindlicher Güter, beispielsweise verderblicher Lebensmittel. Diese messen, kontrolliert durch einen Mikrocontroller, in regelmäßigen Zeitabständen die Temperatur einer temperaturempfindlichen Ware und speichern das Messergebnis oder senden dieses elektronisch an einen korrespondierenden Empfänger. Während der Messung und gegebenenfalls während des Sendevorgangs benötigt ein solcher Sensor vergleichsweise viel Energie, zwischen den Messzyklen sehr wenig. Die erfindungsgemäße elektrochemische Zelle bedient das Anforderungsprofil eines solchen Sensors ganz ausgezeichnet.

Dementsprechend ist auch eine Sensorvorrichtung umfassend eine elektrochemische Zelle, wie sie oben beschrieben wurde, Gegenstand der vorliegenden Erfindung.

Die Sensorvorrichtung umfasst bevorzugt weiterhin einen Sensor, der mindestens einen physikalischen oder chemischen Parameter aus seiner Umgebung qualitativ und/oder quantitativ erfassen kann. Weiterhin umfasst die Sensorvorrichtung in bevorzugten Ausführungsformen einen Mikrocontroller, der die Funktion des Sensors kontrolliert.

Es ist erfindungsgemäß vorgesehen, dass die elektrochemische Zelle den Sensor und/oder den Mikrocontroller mit elektrischer Energie versorgt.

Weitere Merkmale und Vorteile der beschriebenen Erfindung ergeben sich aus der nachfolgenden Beschreibung bevorzugter Ausführungsformen der erfindungsgemäßen elektrochemischen Zelle. Die beschriebene bevorzugte Ausführungsform dient lediglich zur Erläuterung und zum besseren Verständnis der Erfindung und ist in keiner Weise einschränkend zu verstehen.

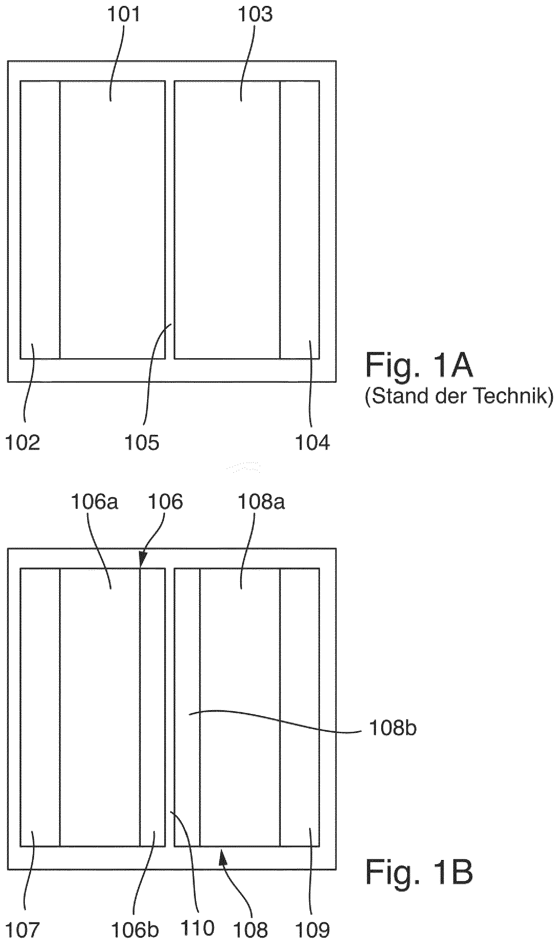

In Fig. 1A ist eine elektrochemische Zelle dargestellt, wie sie beispielsweise aus der WO 2006/105966 A1 bekannt ist (Draufsicht, schematische Darstellung). Eine positive Elektrode 101 ist auf einen Stromableiter 102 aufgedruckt. Eine negative Elektrode 103 ist auf einen Stromableiter 104 aufgedruckt. Zwischen den beiden Elektroden befindet sich der Spalt 105.

Ganz anders bei der in Fig. 1B (Draufsicht, schematische Darstellung) dargestellten erfindungsgemäßen Zelle. Eine positive Elektrode 106 setzt sich hier aus einem Teilbereich 106a und einem Teilbereich 106b zusammen. Eine negative Elektrode 108 setzt sich aus einem Teilbereich 108a und einem Teilbereich 108b zusammen. Der Teilbereich 106a ist aus einem zweiten positiven Elektroden material gebildet, der Teilbereich 106b aus einem ersten positiven Elektrodenmaterial, wobei das erste positive Elektrodenmaterial eine höhere Doppelschichtkapazität als das zweite aufweist. Der Teilbereich 108a ist aus einem zweiten negativen Elektrodenmaterial gebildet, der Teilbereich 108b aus einem ersten negativen Elektrodenmaterial. Das erste negative Elektrodenmaterial weist eine höhere Doppelschichtkapazität als das zweite negative Elektrodenmaterial auf.

Konkret realisiert wurde dies, indem die Bereiche 106b und 108b aus Aktivkohle gefertigt wurden. Der Bereich 108a besteht im Wesentlichen aus Zinkpartikeln, wohingegen der Bereich 106a im Wesentlichen aus Mangandioxid besteht.

Sowohl die Elektrode 106 als auch die Elektrode 108 sind jeweils auf einem Stromableiter 107 und 109 angeordnet. In diesem Aspekt unterscheidet sich die erfindungsgemäße elektrochemische Zelle nicht vom Stand der Technik. Der wesentliche Unterschied ist jedoch, dass der Spalt 109 von Elektrodenmaterialien mit einer hohen Doppelschichtkapazität begrenzt wird. Bei einer Entladung der in Fig. 1B dargestellten Zelle kann es entsprechend zu einem sehr schnellen Ladungsaustausch zwischen den Schichten 106b und 108b kommen. Die in Fig. 1B dargestellte Zelle kann daher im Vergleich zur in Fig. 1A dargestellten Zelle relativ große Pulsströme liefern.

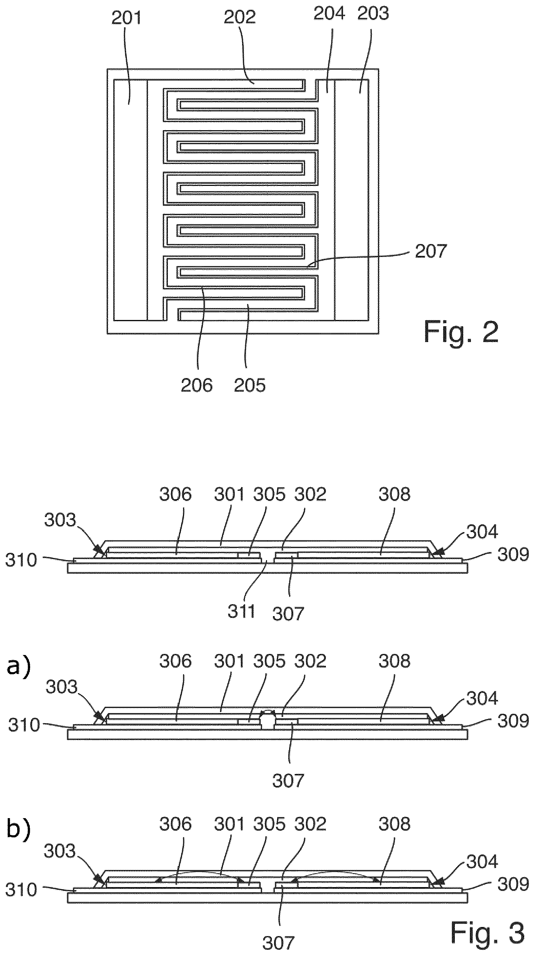

Eine bevorzugte Ausführungsform der erfindungsgemäßen elektrochemischen Zelle ist in Fig. 2 dargestellt (Draufsicht, schematische Darstellung). Auf einen Ableiter 201 ist eine kammförmige Elektrode 202 aufgebracht. Auf einen Ableiter 203 ist eine kammförmige Elektrode 204 aufgebracht. Zwischen den kammförmigen Elektroden 202 und 204 befindet sich ein Spalt 205. Dieser wird begrenzt durch zwei Streifen 206 und 207 aus einem Material mit einer hohen Doppelschichtkapazität. Konkret handelt es sich hierbei um Aktivkohle. Der Bereich 204 besteht im Wesentlichen aus Zinkpartikeln, wohingegen der Bereich 202 im Wesentlichen aus Mangandioxid besteht. Die kammförmige Elektrode 202 und der Streifen 206 bilden gemeinsam die positive Elektrode. Die kammförmige Elektrode 204 und der Streifen 207 bilden gemeinsam die positive Elektrode.

In Fig. 3 ist schematisch das Ladeverhalten einer Ausführungsform einer erfindungsgemäßen elektrochemischen Zelle dargestellt (Querschnitt, schematische Darstellung). Die erfindungsgemäße elektrochemische Zelle weist eine positive Elektrode 303 und eine negative Elektrode 304 auf, zwischen denen sich ein Spalt 311 befindet. Die positive Elektrode 303 ist mit der negativen Elektrode 304 über die Elektrolytschicht 302 verbunden, die die Elektroden überdeckt und auch den Spalt 311 ausfüllt. Eine Gehäusefolie 301 deckt wiederum die Elektrolytschicht 302 ab.

Die positive Elektrode 303 umfasst den ersten Teilbereich 305 und den zweiten Teilbereich 306, die negative Elektrode 304 umfasst den ersten Teilbereich 307 und den zweiten Teilbereich 308. Der Teilbereich 306 besteht im Wesentlichen aus Mangandioxid. Der Teilbereich 308 besteht im Wesentlichen aus Zink. Die Teilbereiche 305 und 307 bestehen hingegen aus Aktivkohle. Werden die metallischen Ableiter 309 und 310 über einen Verbraucher miteinander verbunden, kann sehr schnell ein elektrischer Ladungsaustausch zwischen den Teilbereichen 305 und 307 erfolgen (Schritt a). In Schritt b ist der Stromfluss beim Nachladen der Teilbereiche 305 und 307 dargestellt.

## Patentansprüche

1. Elektrochemische Zelle mit einer positiven und einer negativen Elektrode, die über einen ionenleitfähigen Elektrolyten miteinander verbunden sind,
wobei
• die positive Elektrode ein erstes positives und ein zweites positives Elektrodenmaterial umfasst, und
• die negative Elektrode ein erstes negatives und ein zweites negatives Elektrodenmaterial umfasst,
wobei
• das erste positive Elektrodenmaterial eine höhere Doppelschichtkapazität als das zweite positive Elektrodenmaterial aufweist und
• das erste positive Elektrodenmaterial getrennt von dem zweiten positiven Elektrodenmaterial in einem ersten Teilbereich der positiven Elektrode angereichert ist und
• das zweite positive Elektrodenmaterial getrennt von dem ersten positiven Elektrodenmaterial in einem zweiten Teilbereich der positiven Elektrode angereichert ist
und
• das erste negative Elektrodenmaterial eine höhere Doppelschichtkapazität als das zweite negative Elektrodenmaterial aufweist und
• das erste negative Elektrodenmaterial getrennt von dem zweiten negativen Elektrodenmaterial in einem ersten Teilbereich der negativen Elektrode angereichert ist und
• das zweite negative Elektrodenmaterial getrennt von dem ersten negativen Elektrodenmaterial in einem zweiten Teilbereich der negativen Elektrode angereichert ist,
**dadurch gekennzeichnet, dass**
• die positive und die negative Elektrode getrennt durch einen Spalt in einer koplanaren Anordnung nebeneinander auf einem flächigen Substrat angeordnet sind und
• der erste Teilbereich der positiven Elektrode unmittelbar an eine Seite des Spalts zwischen den Elektroden und der erste Teilbereich der negativen Elektrode unmittelbar an eine andere Seite des Spalts angrenzt.

2. Elektrochemische Zelle nach Anspruch 1, **dadurch gekennzeichnet, dass** es sich bei der Zelle um eine Primärzelle handelt.

3. Elektrochemische Zelle nach einem der vorhergehenden Ansprüche, **dadurch gekennzeichnet, dass** der erste Teilbereich der positiven Elektrode und der erste Teilbereich der negativen Elektrodejeweils streifenförmig ausgebildet sind.

4. Elektrochemische Zelle nach einem der vorhergehenden Ansprüche, **gekennzeichnet durch** mindestens eines der folgenden Merkmale oder durch eine Kombination aus zwei oder mehr derfolgenden Merkmale:
(a) Das erste positive Elektrodenmaterial weist einen höheren prozentualen Anteil an mindestens einem kohlenstoffbasierten Material, insbesondere aus der Gruppe mit Aktivkohle (AC), Aktivkohlefaser (AFC), Carbid-abgeleiteter Kohlenstoff (CDC), Kohlenstoff-Aerogel, Graphit (Graphen) und Kohlenstoffnanoröhren (CNTs), auf als das zweite positive Elektrodenmaterial.
(b) Das erste negative Elektrodenmaterial weist einen höheren prozentualen Anteil an mindestens einem kohlenstoffbasierten Material, insbesondere aus der Gruppe mit Aktivkohle (AC), Aktivkohlefaser (AFC), Carbid-abgeleiteter Kohlenstoff (CDC), Kohlenstoff-Aerogel, Graphit (Graphen) und Kohlenstoffnanoröhren (CNTs), auf als das zweite negative Elektrodenmaterial.
(c) Das erste positive Elektrodenmaterial weist einen Anteil an dem mindestens einen kohlenstoffbasierten Material im Bereich von 5 Gew.-% bis 100 Gew.-%, bezogen auf das Gesamtgewicht aller festen Bestandteile des Elektrodenmaterials, auf.
(d) Das zweite positive Elektrodenmaterial weist einen Anteil an dem mindestens einen kohlenstoffbasierten Material im Bereich von 0 Gew.-% bis 50 Gew.-%, bezogen auf das Gesamtgewicht aller festen Bestandteile des Elektrodenmaterials, auf.
(e) Das erste negative Elektrodenmaterial weist einen Anteil an dem mindestens einen kohlenstoffbasierten Material im Bereich von 5 Gew.-% bis 100 Gew.-%, bezogen auf das Gesamtgewicht aller festen Bestandteile des Elektrodenmaterials, auf.
(f) Das zweite negative Elektrodenmaterial weist einen Anteil an dem mindestens einen kohlenstoffbasierten Material im Bereich von 0 Gew.-% bis 50 Gew.-%, bezogen auf das Gesamtgewicht aller festen Bestandteile des Elektrodenmaterials, auf.

5. Elektrochemische Zelle nach einem der vorhergehenden Ansprüche, **gekennzeichnet durch** mindestens eines der folgenden Merkmale oder durch eine Kombination aus zwei oder mehr derfolgenden Merkmale:
(g) Das erste positive Elektrodenmaterial weist einen Anteil an einem Übergangsmetalloxid und/oder einem leitfähigen Polymer auf, welcher dem Elektrodenmaterial eine Pseudokapazität verleiht.
(h) Das erste negative Elektrodenmaterial weist einen Anteil an einem Metall und/oder einem leitfähigen Polymer auf, welcher dem Elektrodenmaterial eine Pseudokapazität verleiht.
(i) Das erste positive Elektrodenmaterial weist einen Anteil an dem Übergangsmetalloxid und/oder dem leitfähigen Polymer im Bereich von 0,1 Gew.-% bis 25 Gew.-%, bezogen auf das Gesamtgewicht aller festen Bestandteile des Elektrodenmaterials, auf.
(j) Das erste negative Elektrodenmaterial weist einen Anteil an dem Metall und/oder dem leitfähigen Polymer im Bereich von 0,1 Gew.-% bis 25 Gew.-%, bezogen auf das Gesamtgewicht aller festen Bestandteile des Elektrodenmaterials, auf.

6. Elektrochemische Zelle nach einem der vorhergehenden Ansprüche, **gekennzeichnet durch** mindestens eines der folgenden Merkmale oder durch eine Kombination aus zwei oder mehr derfolgenden Merkmale:
(a) Das zweite positive Elektrodenmaterial umfasst ein Material aus der Gruppe mit Mangandioxid, Silberoxid, Nickelhydroxid oder einen Katalysator, der die Reduktion von Luftsauerstoff bei Raumtemperatur katalysiert.
(b) Das zweite negative Elektrodenmaterial umfasst Zink oder eine Zinklegierung.
(c) Das zweite positive Elektrodenmaterial weist einen Anteil an dem Mangandioxid, Silberoxid, Nickelhydroxid oder dem Katalysator im Bereich von 50 Gew.-% bis 100 Gew.-%, bezogen auf das Gesamtgewicht aller festen Bestandteile des Elektrodenmaterials, auf.
(d) Das zweite negative Elektrodenmaterial weist einen Anteil an dem Zink oder der Zinklegierung im Bereich von 50 Gew.-% bis 100 Gew.-%, bezogen auf das Gesamtgewicht aller festen Bestandteile des Elektrodenmaterials, auf.

7. Sensorvorrichtung, umfassend eine elektrochemische Zelle nach einem der vorhergehenden Ansprüche, einen Sensor, der mindestens einen physikalischen oder chemischen Parameter aus seiner Umgebung qualitativ und/oder quantitativ erfassen kann sowie einen Mikrocontroller, der die Funktion des Sensors kontrolliert, wobei die elektrochemische Zelle den Sensor und/oder den Mikrocontroller mit elektrischer Energie versorgt.

## Claims

1. Electrochemical cell having a positive electrode and a negative electrode which are connected to one another via an ion-conductive electrolyte where
• the positive electrode comprises a first positive electrode material and a second positive electrode material, and
• the negative electrode comprises a first negative electrode material and a second negative electrode material,
where
• the first positive electrode material has a higher double layer capacity than the second positive electrode material and
• the first positive electrode material is enriched, separately from the second positive electrode material, in a first subregion of the positive electrode and
• the second positive electrode material is enriched, separately from the first positive electrode material, in a second subregion of the positive electrode
and
• the first negative electrode material has a higher double layer capacity than the second negative electrode material and
• the first negative electrode material is enriched, separately from the second negative electrode material, in a first subregion of the negative electrode and
• the second negative electrode material is enriched, separately from the first negative electrode material, in a second subregion of the negative electrode,
**characterized in that**
• the positive electrode and the negative electrode are arranged next to one another and separated by a gap in a coplanar arrangement on a sheet-like substrate and
• the first subregion of the positive electrode directly adjoins one side of the gap between the electrodes and the first subregion of the negative electrode directly adjoins another side of the gap.

2. Electrochemical cell according to Claim 1, **characterized in that** the cell is a primary cell.

3. Electrochemical cell according to either of the preceding claims, **characterized in that** the first subregion of the positive electrode and the first subregion of the negative electrode each have a strip-like shape.

4. Electrochemical cell according to any of the preceding claims, **characterized by** at least one of the following features or by a combination of two or more of the following features:
(a) The first positive electrode material has a higher percentage of at least one carbon-based material, in particular from the group consisting of activated carbon (AC), activated carbon fibres (AFC), carbide-derived carbon (CDC), carbon aerogel, graphite (graphene) and carbon nanotubes (CNTs), than the second positive electrode material.
(b) The first negative electrode material has a higher percentage of at least one carbon-based material, in particular from the group consisting of activated carbon (AC), activated carbon fibres (AFC), carbide-derived carbon (CDC), carbon aerogel, graphite (graphene) and carbon nanotubes (CNTs), than the second negative electrode material.
(c) The first positive electrode material has a proportion of the at least one carbon-based material in the range from 5% by weight to 100% by weight, based on the total weight of all solid constituents of the electrode material.
(d) The second positive electrode material has a proportion of the at least one carbon-based material in the range from 0% by weight to 50% by weight, based on the total weight of all solid constituents of the electrode material.
(e) The first negative electrode material has a proportion of the at least one carbon-based material in the range from 5% by weight to 100% by weight, based on the total weight of all solid constituents of the electrode material.
(f) The second negative electrode material has a proportion of the at least one carbon-based material in the range from 0% by weight to 50% by weight, based on the total weight of all solid constituents of the electrode material.

5. Electrochemical cell according to any of the preceding claims, **characterized by** at least one of the following features or by a combination of two or more of the following features:
(g) The first positive electrode material has a proportion of a transition metal oxide and/or a conductive polymer which gives the electrode material a pseudo capacity.
(h) The first negative electrode material has a proportion of a metal and/or a conductive polymer which gives the electrode material a pseudo capacity.
(i) The first positive electrode material has a proportion of the transition metal oxide and/or the conductive polymer in the range from 0.1% by weight to 25% by weight, based on the total weight of all solid constituents of the electrode material.
(j) The first negative electrode material has a proportion of the metal and/or the conductive polymer in the range from 0.1% by weight to 25% by weight, based on the total weight of all solid constituents of the electrode material.

6. Electrochemical cell according to any of the preceding claims, **characterized by** at least one of the following features or by a combination of two or more of the following features:
(a) The second positive electrode material comprises a material from the group consisting of manganese dioxide, silver oxide, nickel hydroxide or a catalyst which catalyses the reduction of atmospheric oxygen at room temperature.
(b) The second negative electrode material comprises zinc or a zinc alloy.
(c) The second positive electrode material has a proportion of the manganese dioxide, silver oxide, nickel hydroxide or the catalyst in the range from 50% by weight to 100% by weight, based on the total weight of all solid constituents of the electrode material.
(d) The second negative electrode material has a proportion of the zinc or the zinc alloy in the range from 50% by weight to 100% by weight, based on the total weight of all solid constituents of the electrode material.

7. Sensor device comprising an electrochemical cell according to any of the preceding claims, a sensor which can qualitatively and/or quantitatively measure at least one physical or chemical parameter of its environment and also a microcontroller which controls the function of the sensor, wherein the electrochemical cell supplies the sensor and/or the microcontroller with electric energy.

## Revendications

1. Cellule électrochimique comprenant une électrode positive et une électrode négative, qui sont reliées l'une avec l'autre par le biais d'un électrolyte conducteur d'ions,
- l'électrode positive comprenant un premier matériau d'électrode positive et un deuxième matériau d'électrode positive, et
- l'électrode négative comprenant un premier matériau d'électrode négative et un deuxième matériau d'électrode négative,
- le premier matériau d'électrode positive présentant une capacité de double couche plus élevée que le deuxième matériau d'électrode positive, et
- le premier matériau d'électrode positive étant concentré séparément du deuxième matériau d'électrode positive dans une première zone de l'électrode positive, et
- le deuxième matériau d'électrode positive étant concentré séparément du premier matériau d'électrode positive dans une deuxième zone de l'électrode positive, et
- le premier matériau d'électrode négative présentant une capacité de double couche plus élevée que le deuxième matériau d'électrode négative, et
- le premier matériau d'électrode négative étant concentré séparément du deuxième matériau d'électrode négative dans une première zone de l'électrode négative, et
- le deuxième matériau d'électrode négative étant concentré séparément du premier matériau d'électrode négative dans une deuxième zone de l'électrode négative, **caractérisée en ce que**
- l'électrode positive et l'électrode négative sont agencées séparées par une fente selon un agencement coplanaire l'une à côté de l'autre sur un substrat plat, et
- la première zone de l'électrode positive est immédiatement adjacente à un côté de la fente entre les électrodes et la première zone de l'électrode négative est immédiatement adjacente à un autre côté de la fente.

2. Cellule électrochimique selon la revendication 1, **caractérisée en ce que** la cellule est une cellule primaire.

3. Cellule électrochimique selon l'une quelconque des revendications précédentes, **caractérisée en ce que** la première zone de l'électrode positive et la première zone de l'électrode négative sont chacune configurées en forme de bande.

4. Cellule électrochimique selon l'une quelconque des revendications précédentes, **caractérisée par** au moins une des caractéristiques suivantes ou par une combinaison de deux ou plus des caractéristiques suivantes :
(a) le premier matériau d'électrode positive présente une proportion en pourcentage plus élevée en au moins un matériau à base de carbone, notamment du groupe constitué par le charbon actif (AC), les fibres de charbon actif (AFC), le carbone dérivé de carbure (CDC), l'aérogel de carbone, le graphite (graphène) et les nanotubes de carbone (CNT), que le deuxième matériau d'électrode positive,
(b) le premier matériau d'électrode négative présente une proportion en pourcentage plus élevée en au moins un matériau à base de carbone, notamment du groupe constitué par le charbon actif (AC), les fibres de charbon actif (AFC), le carbone dérivé de carbure (CDC), l'aérogel de carbone, le graphite (graphène) et les nanotubes de carbone (CNT), que le deuxième matériau d'électrode négative,
(c) le premier matériau d'électrode positive présente une proportion en ledit au moins un matériau à base de carbone dans la plage allant de 5 % en poids à 100 % en poids, par rapport au poids total de tous les constituants solides du matériau d'électrode,
(d) le deuxième matériau d'électrode positive présente une proportion en ledit au moins un matériau à base de carbone dans la plage allant de 0 % en poids à 50 % en poids, par rapport au poids total de tous les constituants solides du matériau d'électrode,
(e) le premier matériau d'électrode négative présente une proportion en ledit au moins un matériau à base de carbone dans la plage allant de 5 % en poids à 100 % en poids, par rapport au poids total de tous les constituants solides du matériau d'électrode,
(f) le deuxième matériau d'électrode négative présente une proportion en ledit au moins un matériau à base de carbone dans la plage allant de 0 % en poids à 50 % en poids, par rapport au poids total de tous les constituants solides du matériau d'électrode.

5. Cellule électrochimique selon l'une quelconque des revendications précédentes, **caractérisée par** au moins une des caractéristiques suivantes ou par une combinaison de deux ou plus des caractéristiques suivantes :
(g) le premier matériau d'électrode positive présente une proportion en un oxyde de métal de transition et/ou en un polymère conducteur, qui confère au matériau d'électrode une pseudo-capacité,
(h) le premier matériau d'électrode négative présente une proportion en un métal et/ou en un polymère conducteur, qui confère au matériau d'électrode une pseudo-capacité,
(i) le premier matériau d'électrode positive présente une proportion en l'oxyde de métal de transition et/ou le polymère conducteur dans la plage allant de 0,1 % en poids à 25 % en poids, par rapport au poids total de tous les constituants solides du matériau d'électrode,
(j) le premier matériau d'électrode négative présente une proportion en le métal et/ou le polymère conducteur dans la plage allant de 0,1 % en poids à 25 % en poids, par rapport au poids total de tous les constituants solides du matériau d'électrode.

6. Cellule électrochimique selon l'une quelconque des revendications précédentes, **caractérisée par** au moins une des caractéristiques suivantes ou par une combinaison de deux ou plus des caractéristiques suivantes :
(a) le deuxième matériau d'électrode positive comprend un matériau du groupe constitué par le dioxyde de manganèse, l'oxyde d'argent, l'hydroxyde de nickel ou un catalyseur qui catalyse la réduction de l'oxygène de l'air à température ambiante,
(b) le deuxième matériau d'électrode négative comprend du zinc ou un alliage de zinc,
(c) le deuxième matériau d'électrode positive présente une teneur en le dioxyde de manganèse, l'oxyde d'argent, l'hydroxyde de nickel ou le catalyseur dans la plage allant de 50 % en poids à 100 % en poids, par rapport au poids total de tous les constituants solides du matériau d'électrode,
(d) le deuxième matériau d'électrode négative présente une teneur en le zinc ou l'alliage de zinc dans la plage allant de 50 % en poids à 100 % en poids, par rapport au poids total de tous les constituants solides du matériau d'électrode.

7. Dispositif à capteur, comprenant une cellule électrochimique selon l'une quelconque des revendications précédentes, un capteur, qui peut recueillir qualitativement et/ou quantitativement au moins un paramètre physique ou chimique de son environnement, ainsi qu'un microcontrôleur, qui contrôle le fonctionnement du capteur, la cellule électrochimique alimentant le capteur et/ou le microcontrôleur avec de l'énergie électrique.
